# EUROPÄISCHE PATENTSCHRIFT

(11) **EP 1 782 972 B1**
(45) Veröffentlichungstag und Bekanntmachung des Hinweises auf die Patenterteilung: **02.07.2008**
(21) Anmeldenummer: 06022829.3
(22) Anmeldetag: 02.11.2006
(51) Int. Cl.: B60D 1/06, B60D 1/28

(54) **Anhängerkupplung für ein Zugfahrzeug, insbesondere für einen Ackerschlepper**
Trailer hitch for a towing vehicle, especially for an agricultural tractor
Attelage de remorque pour un véhicule tracteur, notamment pour un tracteur agricole

(30) Priorität: 05.11.2005 DE 202005017374 U
(43) Veröffentlichungstag der Anmeldung: 09.05.2007
(73) Patentinhaber: Sauermann, Hans, D-86558 Freinhausen (DE)
(72) Erfinder: Sauermann, Hans, D-86558 Freinhausen (DE)
(74) Vertreter: Witzany, Manfred

(56) Entgegenhaltungen:
- EP-A1- 1 426 202
- DE-C1- 3 824 028
- DE-C1- 10 118 862
- US-A1- 3 061 334
- US-A1- 3 792 432

## Beschreibung

Die Erfindung betrifft eine Anhängerkupplung für ein Zugfahrzeug, insbesondere für einen Ackerschlepper, gemäß dem Oberbegriff des Patentanspruchs 1.

Aus der gattungsbildenden DE 101 18 862 C ist eine Anhängerkupplung für einen Ackerschlepper bekannt, die ein Kupplungsglied in Form eines Kugelkopfes aufweist. Dem Kupplungsglied ist ein verschwenkbarer Sperrhebel zugeordnet, der eine Kugelkalotte einer Anhängerdeichsel in einer gegen den Kupplungskopf gedrückten Lage hält. Um die Anhängerdeichsel vom Kugelkopf lösen zu können, ist der Sperrhebel um eine Achse verschwenkbar gehalten. Während der Fahrt wird der Sperrhebel mittels eines Arretierbolzens gesichert. Diese bekannte Anhängerkupplung hat sich in der Praxis gut bewährt und bildet den Ausgangspunkt der vorliegenden Erfindung.

Der Erfindung liegt die Aufgabe zugrunde, eine Anhängerkupplung der eingangs genannten Art zu schaffen, die sich durch eine erhöhte Betriebssicherheit auszeichnet.

Diese Aufgabe wird erfindungsgemäß mit den Merkmalen des Patentanspruchs 1 gelöst.

Die Anhängerkupplung gemäß Anspruch 1 dient für ein Zugfahrzeug, insbesondere für einen Ackerschlepper, und ist daher insbesondere für rauhe Betriebsbedingungen im Geländeeinsatz gedacht. Die damit verbundenen Erschütterungen stellen an die Betriebssicherheit der Anhängerkupplung hohe Anforderungen. Die Anhängerkupplung weist ein fahrzeugfestes Kupplungsglied auf, welches von einer Anhängerdeichsel erfaßt werden kann. Das Kupplungsglied ist demnach während des Kuppelvorgangs feststehend. Bevorzugte Ausbildungen des Kupplungsglieds sind ein Kugelkopf bzw. ein Piton. Es ist grundsätzlich vorstellbar, daß das Kupplungsglied insbesondere in vertikale Richtung zum Fahrzeug verschiebbar ausgebildet ist, um eine Höhenanpassung des Kupplungsglieds an die Anhängerdeichsel zu realisieren. Während des Kupplungsvorganges bleibt jedoch das Kupplungsglied fahrzeugfest. Dies ist ein wesentlicher Unterschied zu Bolzenkupplungen, bei denen das Kupplungsglied von einem axial verschiebbaren Kuppelzapfen gebildet ist. Durch die Ausbildung des Kupplungsgliedes als fahrzeugfestes Element bedarf es einer zusätzlichen Sicherung der Anhängerdeichsel, um ein Verlieren des Anhängers zu verhindern. Zu diesem Zweck ist dem Kupplungsglied mindestens ein Sperrhebel zugeordnet, der zwischen einer die Anhängerdeichsel gegen das Kupplungsglied haltenden Kuppelstellung und einer diese freigebenden Lösestellung verstellbar ist. In der Kuppelstellung verhindert der Sperrhebel ein ungewolltes Lösen der Anhängerdeichsel vom Kupplungsglied. In der Lösestellung dagegen ist die Anhängerdeichsel vertikal nach oben verschiebbar, um die Verbindung zwischen dem Zugfahrzeug und dem Anhänger lösen zu können. Um ein ungewolltes Verstellen des Sperrhebels in die Lösestellung während der Fahrt zu verhindern, ist ein Arretierbolzen vorgesehen, der mit dem Sperrhebel in Wirkverbindung steht. Dieser Arretierbolzen ist zwischen einer den Sperrhebel in der Kuppelstellung arretierenden Sicherungsstellung und einer Freigabestellung verstellbar. Damit muß zum Lösen der Kupplungsverbindung zunächst der Arretierbolzen in die Freigabestellung gebracht werden, bevor die Anhängerdeichsel durch gleichzeitiges Verstellen des Sperrhebels in die Lösestellung vom Kupplungsglied getrennt werden kann. Dieser Sicherungsmechanismus, bestehend aus Sperrhebel und Arretierbolzen, ist nicht hinreichend zuverlässig, da auf den Arretierbolzen während der Fahrt im Gelände erhebliche Stöße und Erschütterungen ausgeübt werden. Diese können in ungünstigen Fällen den Arretierbolzen in die Freigabestellung bringen, so daß sich die Anhängerdeichsel in der Folge lösen kann. Zur Erhöhung der Betriebssicherheit dieser Anhängerkupplung weist der Arretierbolzen mindestens eine Anschlagfläche auf, die in der Sicherungsstellung mit einem Sicherungsarm zusammenwirkt. Der Sicherungsarm ist dabei im wesentlichen parallel zur Anschlagfläche verstellbar, so daß der Arretierbolzen nicht in der Lage ist, den Sicherungsarm wegzudrücken. Dabei genügt es, wenn die Bewegungsbahn und die Anschlagfläche einen hinreichend kleinen Winkel zueinander einschließen, um eine Selbsthemmung bei der Kraftübertragung vom Arretierbolzen auf den Sicherungsarm zu erzielen. In der Regel reicht ein Winkel von höchstens 5°, vorzugsweise höchstens 3°, aus. Eine optimale Sicherheit des Kupplungsmechanismus ergibt sich, wenn der Sicherungsarm parallel zur Anschlagfläche verstellt wird, zumal in diesem Fall keine Verstellkraft vom Arretierbolzen auf den Sicherungsarm ausgeübt werden kann. Der Sicherungsarm ist federnd gegen den Arretierbolzen vorgespannt, damit er stets sauber an der Anschlagfläche anliegt. Falls der Sicherungsarm durch extrem starke Erschütterungen gegen die Federkraft weggedrückt werden, sollte, wird er innerhalb sehr kurzer Zeit wieder in die Sicherungsstellung federnd gedrückt, so daß der Arretierbolzen keine Möglichkeit hat, in dieser kurzen Zeit seine Sicherungsstellung zu verlassen. Außerdem ist daran gedacht, den Arretierbolzen und den Sicherungsarm in unterschiedliche Richtungen zu verstellen, so daß bei einer Erschütterung keine Kräfte wirken können, die beide Teile gleichzeitig verstellen. Demnach bleibt der Arretierbolzen bei jeder Erschütterung in seiner Sicherungsstellung. Da der Sicherungsarm nur geringe Schubkräfte des Arretierbolzens abstützen muß, kann er relativ leichtbauend ausgebildet sein. Dies macht ihn wesentlich unempfindlicher gegen Erschütterungen als der massive Arretierbolzen.

Zur weiteren Erhöhung der Betriebssicherheit der Anhängerkupplung ist es gemäß Anspruch 2 vorteilhaft, wenn die Anschlagfläche im wesentlichen senkrecht zur Verstellrichtung des Arretierbolzens verläuft. Wird bei einer Erschütterung eine Kraft auf den Arretierbolzen ausgeübt, die diesen in die Freigabestellung belastet, so wirkt diese Kraft im wesentlichen senkrecht auf den Sicherungsarm, so daß dieser durch die wirkende Kraft des Arretierbolzens nicht verstellt werden kann. Zur Erzielung dieser Wirkung ist es ausreichend, wenn die Anschlagfläche mit der Verstellrichtung des Arretierbolzens einen Winkel zwischen 85° und 95°, vorzugsweise zwischen 87° und 93° einschließt. Eine optimale Sicherungswirkung ergibt sich, wenn zwischen der Anschlagfläche und der Verstellrichtung des Arretierbolzens ein rechter Winkel gebildet ist.

Eine bevorzugte Ausbildung des Kupplungsglieds in Form eines Pitons bzw. Kugelkopfes ergibt sich aus Anspruch 3.

Damit der Sperrhebel die hohen negativen Stützlasten der Anhängerdeichsel aufnehmen kann, muß dieser samt seiner Lagerung sehr massiv ausgebildet sein. Aus diesem Grund ist es gemäß Anspruch 4 zweckmäßig, wenn der Sperrhebel verschwenkbar zum Kupplungsglied gehalten ist. Eine Schwenklagerung läßt sich mit geringem Aufwand für hohe Belastungen herstellen, ohne massive Führungsschienen zu erfordern.

Zur Erzielung einer sicheren Arretierung des Sperrhebels ist es gemäß Anspruch 5 günstig, wenn der Arretierbolzen axial verschiebbar gehalten ist. Der Arretierbolzen wird dabei so weit verschoben, daß er in der Sicherungsstellung ein Verschwenken des Sperrhebels zuverlässig verhindert. Der Sperrhebel belastet dabei den Arretierbolzen auf Biegung, vorzugsweise Scherung, wobei letzteres durch eine beidseitige Lagerung des Sperrhebels realisiert wird. Bei diesem Belastungsfall kann der Arretierbolzen bei gegebener negativer Stützlast des Sperrhebels sehr klein gebaut werden, so daß der Mechanismus unempfindlicher gegenüber Erschütterungen ist.

Die Anschlagfläche erstreckt sich gemäß Anspruch 6 bevorzugt radial zum Arretierbolzen, so daß diese durch eine einfache, umlaufende Nut gebildet sein kann. In diese Nut greift der Sicherungsarm ein, um jegliche Bewegung des Arretierbolzens zu verhindern.

Um zu vermeiden, daß der Sicherungsarm in seiner Funktion durch eindringenden Schmutz beeinträchtigt wird, ist es gemäß Anspruch 7 vorteilhaft, wenn dieser in einer Bohrung axial verschiebbar geführt ist. In dieser Bohrung kann außerdem eine Feder angeordnet sein, die den Sicherungsarm gegen den Arretierbolzen vorspannt.

Zur Erzielung eines einfachen und gleichzeitig kompakten Aufbaus des Sicherungsmechanismus der Anhängerkupplung ist es gemäß Anspruch 8 günstig, wenn der Sicherungsarm vom Arretierbolzen durchsetzt ist. Der Sicherungsarm weist zu diesem Zweck eine Durchgangsbohrung auf, durch die der Arretierbolzen gesteckt wird.

Alternativ ist es gemäß Anspruch 9 vorteilhaft, wenn der Sicherungsarm verschwenkbar abgestützt ist. Die Schwenkachse verläuft dabei im wesentlichen parallel zum Arretierbolzen, so daß die Bewegungsebene des Sicherungsarms im wesentlichen senkrecht zur Verstellrichtung des Arretierbolzens verläuft. Der Sicherungsarm kann auf diese Weise noch kleiner gebaut werden, da keinerlei Führungen erforderlich sind. Diese Bauweise ist zwar grundsätzlich einer Verschmutzung direkt ausgesetzt, durch den einfachen Schwenkmechanismus führt eine Verschmutzung des Sicherungsarms jedoch nicht zu einer Beeinträchtigung der Funktion, so daß der gesamte Mechanismus auf diese Weise verschmutzungstoleranter ist.

Schließlich ist es gemäß Anspruch 10 vorteilhaft, wenn der Sicherungsarm eine Handhabe aufweist, die nahe dem Arretierbolzen vorgesehen ist. Auf diese Weise ist es einfach möglich, mit einer Hand sowohl den Sicherungsarm als auch den Arretierbolzen zu betätigen, so daß der Sicherungsmechanismus mit einer Hand gelöst werden kann. Dies erleichtert die Bedienung der Anhängerkupplung.

Der Neuerungsgegenstand wird beispielhaft anhand der Zeichnung erläutert, ohne den Schutzumfang zu begrenzen.

Es zeigt:
- Figur 1: eine teilweise geschnittene Darstellung einer ersten Ausführungsform einer Anhängerkupplung von oben,
- Figur 2: eine zugeordnete Darstellung der Anhängerkupplung gemäß Figur 1 von hinten,
- Figur 3: eine zugeordnete Darstellung der Anhängerkupplung gemäß Figur 1 von der Seite,

- Figur 4: eine teilweise geschnittene Darstellung einer zweiten Ausführungsform einer Anhängerkupplung von oben,
- Figur 5: eine zugeordnete Darstellung der Anhängerkupplung gemäß Figur 4 von hinten,
- Figur 6: eine zugeordnete Darstellung der Anhängerkupplung gemäß Figur 4 von der Seite und
- Figur 7: eine zugeordnete Schnittdarstellung der Anhängerkupplung gemäß Figur 4 entlang der Schnittlinie VII-VII.

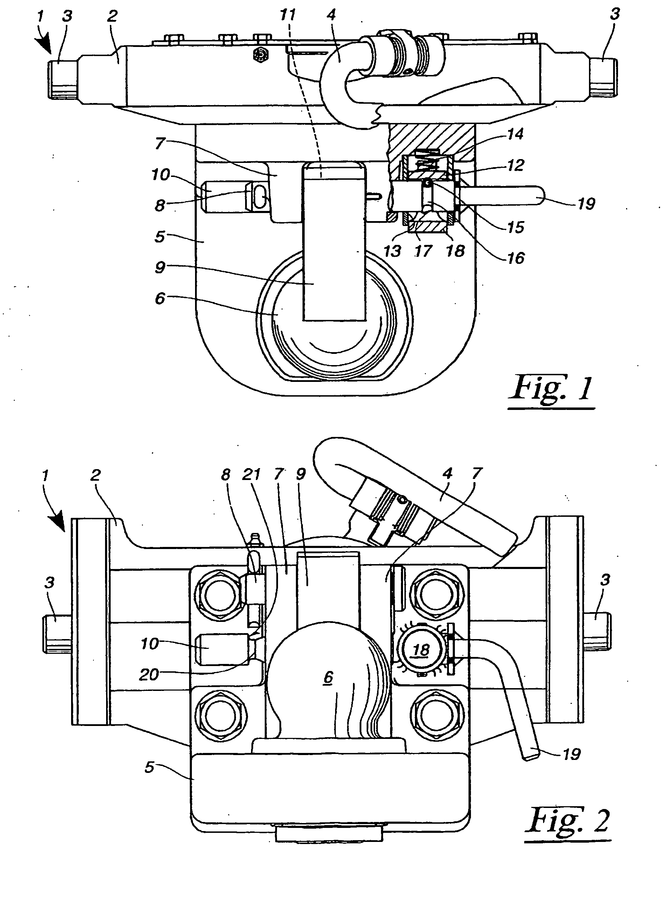

Die Figur 1 zeigt eine teilweise geschnittene Darstellung einer Anhängerkupplung 1. Diese besteht aus einer Tragplatte 2, in der Sperrbolzen 3 axial verschiebbar geführt sind. Diese Sperrbolzen 3 werden mittels einer Handhabe 4 axial verschoben. Sie greifen in Bohrungen einer nicht dargestellten Führungsschiene ein, in der die gesamte Tragplatte 2 höhenverstellbar gehalten ist.

An der Tragplatte 2 ist ein Träger 5 gehalten, der im wesentlichen L-förmig ausgebildet ist. Auf dem Träger 5 ist ein Kupplungsglied 6 in Form eines Kugelkopfes gehalten, der zur Verbindung mit einer nicht dargestellten Kugelkalotte einer Anhängerdeichsel dient. Am Träger 5 sind außerdem zwei Flansche 7 angeformt, die zueinander fluchtende Durchgangsbohrungen aufweisen. In diesen Durchgangsbohrungen ist ein Achsbolzen 8 abgestützt, der ein Drehlager für einen Sperrhebel 9 bildet. Dieser Sperrhebel 9 ergreift die nicht dargestellte Kugelkalotte von oben, so daß die Kugelkalotte zwischen dem Kugelkopf 6 und dem Sperrhebel 9 im Klemmgriff sicher gehalten ist.

Der Sperrhebel 9 ist um den Achsbolzen 8 verschwenkbar gelagert, so daß der Sperrhebel 9 von der dargestellten Kuppelstellung in eine nach oben verschwenkte Lösestellung bringbar ist.

Um den Sperrhebel 9 in der dargestellten Kuppelstellung zu sichern, ist ein Arretierbolzen 10 vorgesehen, der wie der Achsbolzen 8 in zueinander fluchtenden Durchgangsbohrungen der Flansche 7 abgestützt ist. Der Arretierbolzen 10 ist axial verschiebbar gehalten und drückt in der dargestellten Sicherungsstellung gegen einen vertikalen Schenkel 11 des Sperrhebels 9, um eine Verschwenkung desselben nach oben zu verhindern. Wird der Arretierbolzen 10 nach rechts axial verschoben, so wird der Sperrhebel 9 freigegeben und kann zur Lösung der Kupplungsverbindung nach oben verschwenkt werden.

Zur Sicherung des Arretierbolzens 10 gegen ungewollte axiale Verschiebung ist am Träger 5 ein Sicherungsarm 12 abgestützt, der in einer Bohrung 13 des Trägers 5 axial verschiebbar ist. Der Sicherungsarm 12 ist mit einer Feder 14 gegen den Arretierbolzen 10 federnd vorgespannt. Der Sicherungsarm 12 weist eine Kugel 15 auf, die in eine entsprechend geformte radiale Nut 16 des Arretierbolzens 10 eingreift. Diese Nut 16 bildet eine radiale Anschlagfläche 17 für den Sicherungsarm 12, so daß auf diese Weise eine axiale Verschiebung des Arretierbolzens 10 zuverlässig verhindert wird. Der Sicherungsarm 12 weist außerdem eine Handhabe 18 auf, die sich in unmittelbarer Nähe zu einer Handhabe 19 des Arretierbolzens 10 befindet. Damit können beide Handhaben 18, 19 bequem mit einer Hand ergriffen werden, um die Arretierung des Sperrhebels 9 zu lösen. Der Arretierbolzen 10 durchsetzt den Sicherungsarm 12, so daß insgesamt ein sehr kompakter Aufbau entsteht.

Figur 2 zeigt eine zugeordnete Darstellung der Anhängerkupplung gemäß Figur 1 von hinten. Aus dieser Darstellung ist zu erkennen, daß der Arretierbolzen 10 eine weitere Nut 20 aufweist, die im zur Bolzenmitte gerichteten Bereich konisch ausgebildet ist. Am außenseitigen Ende weist die Nut 20 eine radiale Anschlagfläche 21 auf. Diese zusätzliche Nut 20 bewirkt, daß beim axialen Verschieben des Arretierbolzens 10 in die Freigabestellung der Sicherungsarm 12 problemlos in die Nut 20 eintauchen kann. Durch die Anschlagfläche 21 wird jedoch eine Verschiebung des Arretierbolzens 10 über die Freigabestellung hinaus zuverlässig verhindert. Damit ist sichergestellt, daß der Arretierbolzen 10 den Sicherungsarm 12 in jeder erreichbaren Lage durchsetzt. Der Arretierbolzen 10 kann daher den Sicherungsarm 12 zuverlässig in seiner Bohrung 13 halten, so daß keine zusätzlichen Anschläge zum Halten des Sicherungsarms 12 in der Bohrung 13 erforderlich sind. Dies erleichtert insbesondere die Montage der Anhängerkupplung 1.

Zur Erleichterung der Handhabung der Anhängerkupplung 1 ist die Handhabe 19 des Arretierbolzens 10 abgewinkelt. Auf diese Weise wird erreicht, daß die beiden Handhaben 18, 19 noch näher zusammengerückt sind, um die gewünschte Einhand-Bedienung zu erleichtern.

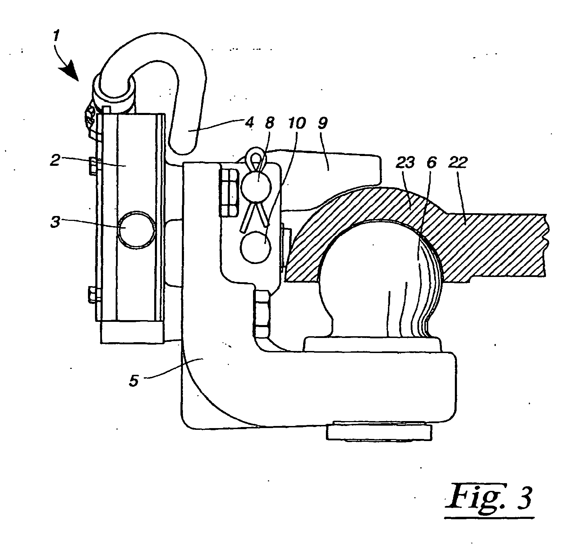

Figur 3 zeigt eine Seitendarstellung der Anhängerkupplung gemäß Figur 1. Aus dieser Figur geht insbesondere die Zuordnung des Kupplungsglieds 6 zum Sperrhebel 9 hervor. In dieser Figur ist außerdem die Anhängerdeichsel 22 mit ihrer Kugelkalotte 23 eingezeichnet.

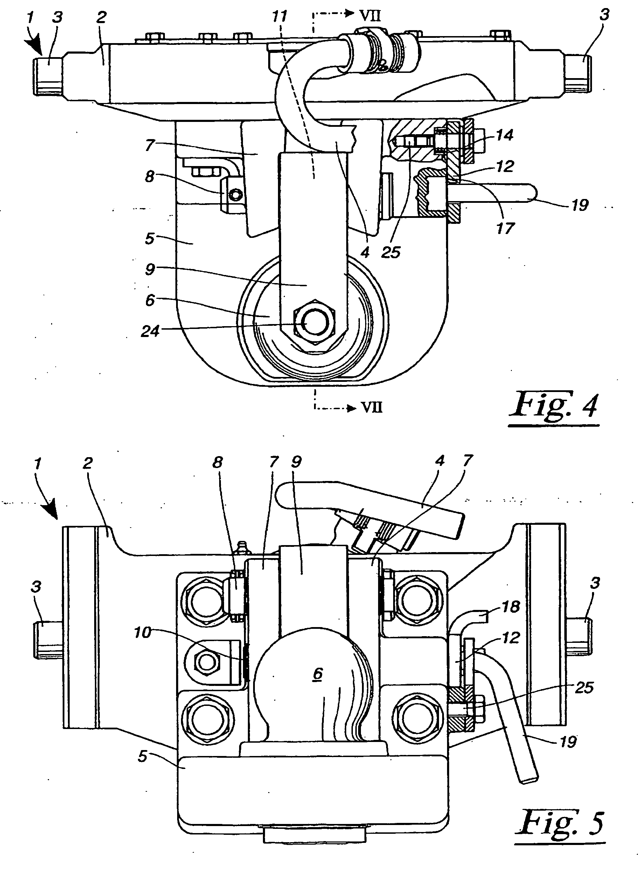

Figur 4 zeigt eine Darstellung einer weiteren Ausführungsform einer Anhängerkupplung 1 von oben, wobei gleiche Bezugszeichen gleiche Teile benennen. Im folgenden wird lediglich auf die Unterschiede zur vorgeschriebenen Ausführungsform eingegangen.

Der Sperrhebel 9 ist bei dieser Ausführungsform mit einer Justiervorrichtung 24 versehen, mit der das Spiel zwischen dem Kupplungsglied 6, der Kugelkalotte 23 und dem Sperrhebel 9 stufenlos eingestellt werden kann. Damit können insbesondere Verschleißerscheinungen problemlos ausgeglichen werden.

Der Arretierbolzen 10 weist wiederum eine Anschlagfläche 17 auf, die jedoch nicht von einer Nut, sondern von einer einfachen Durchmesserreduktion des Arretierbolzens 10 gebildet ist. Diese Anschlagfläche 17 wirkt mit dem Sicherungsarm 12 zusammen. Der Sicherungsarm 12 ist dabei als Schwenkhebel ausgebildet, der um eine Achse 25 verschwenkbar am Träger 5 abgestützt ist. Im Bereich der Schwenkachse 25 ist außerdem die Feder 14 vorgesehen, die bei diesem Ausführungsbeispiel als Drehfeder ausgebildet ist. Der Sicherungsarm 12 ist in einer Ebene verschwenkbar, die senkrecht zur Verschieberichtung des Arretierbolzens 10 liegt.

Aus der zugeordneten Darstellung gemäß Figur 5 ist insbesondere zu entnehmen, daß der Sicherungsarm 12 in seinem oberen Endbereich vom Träger 5 weg gebogen ist, um die Handhabe 18 zu bilden. Diese Handhabe 18 liegt wieder in unmittelbarer Nähe zur ebenfalls abgekröpften Handhabe 19 des Arretierbolzens 10.

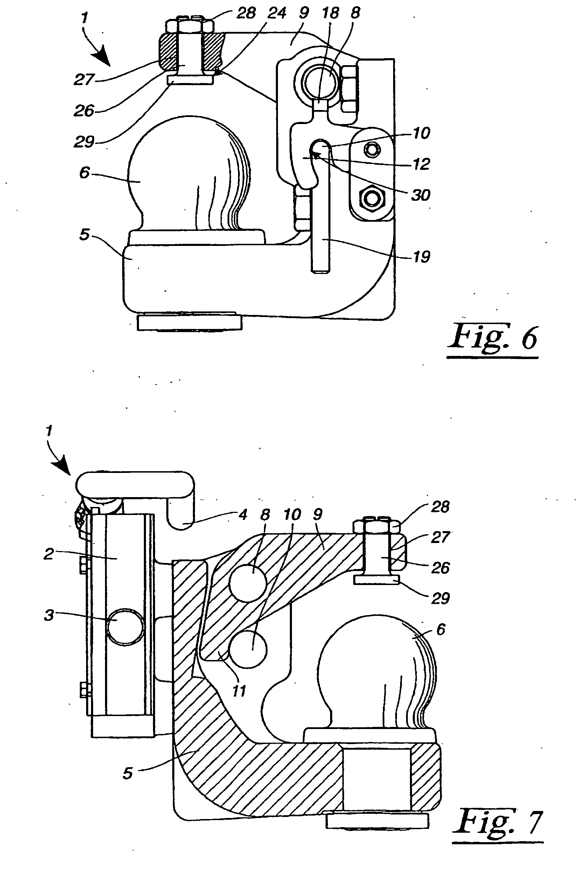

Aus der Figur 6 ist der Aufbau der Justiervorrichtung 24 zu entnehmen. Diese besteht im wesentlichen aus einem Gewindebolzen 26, der in eine entsprechende Gewindebohrung 27 des Sperrhebels 9 eingeschraubt ist. Zur Festlegung des Gewindebolzens 26 ist eine Kontermutter 28 vorgesehen. Im unteren Endbereich weist der Gewindebolzen 26 ein Druckstück 29 auf, welches gegen die Kugelkalotte 23 drückt.

Außerdem ist der Figur 6 zu entnehmen, daß der Sicherungsarm 12 eine bogenförmige Ausnehmung 30 aufweist. Diese Ausnehmung 30 erlaubt ein Umfassen des Arretierbolzens 10, um diesen gegen eine unerwünschte axiale Verschiebung zu sichern.

Schließlich zeigt Figur 7 eine Schnittdarstellung der Anhängerkupplung 1 gemäß Figur 4 entlang der Schnittlinie VII-VII. In dieser Schnittdarstellung ist das Zusammenwirken des Arretierbolzens 10 mit dem Sperrhebel 9 zu erkennen. Der Sperrhebel 9 ist um den Achsbolzen 8 verschwenkbar gelagert und weist einen vertikalen Schenkel 11 auf. Dieser vertikale Schenkel 11 wirkt in der dargestellten Sicherungsstellung direkt mit dem Arretierbolzen 10 zusammen und verhindert jede Verschwenkung des Sperrhebels 9 entgegen dem Uhrzeigersinn.

### Bezugszeichenliste

- 1: Anhängerkupplung
- 2: Tragplatte
- 3: Sperrbolzen
- 4: Handhabe
- 5: Träger
- 6: Kupplungsglied
- 7: Flansch
- 8: Achsbolzen
- 9: Sperrhebel
- 10: Arretierbolzen
- 11: vertikaler Schenkel
- 12: Sicherungsarm
- 13: Bohrung
- 14: Feder
- 15: Kugel
- 16: Nut
- 17: Anschlagfläche
- 18: Handhabe
- 19: Handhabe
- 20: Nut
- 21: Anschlagfläche
- 22: Anhängerdeichsel
- 23: Kugelkalotte
- 24: Justiervorrichtung
- 25: Schwenkachse
- 26: Gewindebolzen
- 27: Gewindebohrung
- 28: Kontermutter
- 29: Druckstück
- 30: Ausnehmung

## Patentansprüche

1. Anhängerkupplung für ein Zugfahrzeug, insbesondere für einen Ackerschlepper, wobei die Anhängerkupplung (1) ein von einer Anhängerdeichsel (22) erfaßbares, fahrzeugfestes Kupplungsglied (6) aufweist, dem mindestens ein Sperrhebel (9) zugeordnet ist, welcher zwischen einer die Anhängerdeichsel (22) gegen das Kupplungsglied (6) haltenden Kuppelstellung und einer diese freigebenden Lösestellung verstellbar ist, wobei der Sperrhebel (9) mit mindestens einem Arretierbolzen (10) in Wirkverbindung steht, der zwischen einer den Sperrhebel (9) in der Kuppelstellung arretierenden Sicherungsstellung und einer Freigabestellung verstellbar ist, **dadurch gekennzeichnet, daß** der Arretierbolzen (10) mindestens eine Anschlagfläche (17) aufweist, die in der Sicherungsstellung mit einem Sicherungsarm (12) zusammenwirkt, der im wesentlichen parallel zur Anschlagfläche (17) verstellbar und gegen den Arretierbolzen (10) federnd vorgespannt ist, um eine Verstellung des Arretierbolzens (10) in die Freigabestellung zu verhindern.

2. Anhängerkupplung nach Anspruch 1, **dadurch gekennzeichnet, daß** die Anschlagfläche (17) im wesentlichen senkrecht zur Verstellrichtung des Arretierbolzens (10) verläuft.

3. Anhängerkupplung nach Anspruch 1 oder 2, **dadurch gekennzeichnet, daß** das Kupplungsglied (6) ein Piton oder Kugelkopf ist.

4. Anhängerkupplung nach mindestens einem der Ansprüche 1 bis 3, **dadurch gekennzeichnet, daß** der Sperrhebel (9) verschwenkbar zum Kupplungsglied (6) gehalten ist.

5. Anhängerkupplung nach mindestens einem der Ansprüche 1 bis 4, **dadurch gekennzeichnet, daß** der Arretierbolzen (10) axial verschiebbar gehalten ist.

6. Anhängerkupplung nach mindestens einem der Ansprüche 1 bis 5, **dadurch gekennzeichnet, daß** sich die Anschlagfläche (17) im wesentlichen radial zum Arretierbolzen (10) erstreckt.

7. Anhängerkupplung nach mindestens einem der Ansprüche 1 bis 6, **dadurch gekennzeichnet, daß** der Sicherungsarm (12) in einer Bohrung (13) axial verschiebbar geführt ist.

8. Anhängerkupplung nach mindestens einem der Ansprüche 1 bis 7, **dadurch gekennzeichnet, daß** der Sicherungsarm (12) vom Arretierbolzen (10) durchsetzt ist.

9. Anhängerkupplung nach mindestens einem der Ansprüche 1 bis 4, **dadurch gekennzeichnet, daß** der Sicherungsarm (12) um eine Achse (25) verschwenkbar abgestützt ist, welche im wesentlichen parallel zum Arretierbolzen (10) ausgerichtet ist.

10. Anhängerkupplung nach mindestens einem der Ansprüche 1 bis 9, **dadurch gekennzeichnet, daß** der Sicherungsarm (12) eine Handhabe (18) aufweist, die nahe dem Arretierbolzen (10) vorgesehen ist, um den Sicherungsarm (12) und den Arretierbolzen (10) gemeinsam mit einer Hand betätigen zu können.

## Claims

1. Trailer hitch for a towing vehicle, especially for an agricultural tractor, wherein the trailer hitch (1) has a coupling element (6) which can be grasped by a trailer drawbar (22), is mounted on the vehicle and is assigned at least one catch lever (9) which is adjustable between a coupling position, in which it holds the trailer drawbar (22) against the coupling element (6), and a release position, in which it releases said trailer drawbar, and wherein the catch lever (9) is operatively connected to at least one locking bolt (10) which can be adjusted between a securing position, in which it locks the catch lever (9) in the coupling position, and a release position, **characterized in that** the locking bolt (10) has at least one stop surface (17) which, in the securing position, interacts with a securing arm (12) which can be adjusted essentially parallel to the stop surface (17) and is prestressed resiliently against the locking bolt (10) in order to prevent adjustment of the locking bolt (10) into the release position.

2. Trailer hitch according to Claim 1, **characterized in that** the stop surface (17) runs essentially perpendicularly to the adjustment direction of the locking bolt (10).

3. Trailer hitch according to Claim 1 or 2, **characterized in that** the coupling element (6) is a piton or a ball head.

4. Trailer hitch according to at least one of Claims 1 to 3, **characterized in that** the catch lever (9) is held pivotably with respect to the coupling element (6).

5. Trailer hitch according to at least one of Claims 1 to 4, **characterized in that** the locking bolt (10) is held in an axially displaceable manner.

6. Trailer hitch according to at least one of Claims 1 to 5, **characterized in that** stop surface (17) extends essentially radially with respect to the locking bolt (10).

7. Trailer hitch according to at least one of Claims 1 to 6, **characterized in that** the securing arm (12) is guided in an axially displaceable manner in a hole (13).

8. Trailer hitch according to at least one of Claims 1 to 7, **characterized in that** the securing arm (12) is passed through by the locking bolt (10).

9. Trailer hitch according to at least one of Claims 1 to 4, **characterized in that** the securing arm (12) is supported in a manner such that it can pivot about an axis (25) which is oriented essentially parallel to the locking bolt (10).

10. Trailer hitch according to at least one of Claims 1 to 9, **characterized in that** the securing arm (12) has a handle (18) which is provided in the vicinity of the locking bolt (10) in order to be able to actuate the securing arm (12) and the locking bolt (10) together by one hand.

## Revendications

1. Dispositif d'attelage pour un véhicule tracteur, notamment pour un tracteur agricole, le dispositif d'attelage (1) présentant un organe d'accouplement (6) fixé au véhicule, pouvant être saisi par un timon d'attelage (22), auquel est associé au moins un levier de blocage (9) qui peut être déplacé entre une position d'accouplement retenant le timon d'attelage (22) contre l'organe d'accouplement (6) et une positon de libération le libérant, le levier de blocage (9) étant en liaison fonctionnelle avec au moins un boulon d'arrêt (10), qui peut être déplacé entre une position de fixation bloquant le levier de blocage (9) dans la position d'accouplement et une position de libération, **caractérisé en ce que** le boulon d'arrêt (10) présente au moins une surface de butée (17) qui coopère dans la position de fixation avec un bras de fixation (12), qui peut être déplacé essentiellement parallèlement à la surface de butée (17) et qui est précontraint élastiquement contre le boulon d'arrêt (10) afin d'empêcher un déplacement du boulon d'arrêt (10) dans la position de libération.

2. Dispositif d'attelage selon la revendication 1, **caractérisé en ce que** la surface de butée (17) s'étend essentiellement perpendiculairement à la direction de déplacement du boulon d'arrêt (10).

3. Dispositif d'attelage selon la revendication 1 ou 2, **caractérisé en ce que** l'organe d'accouplement (6) est un piton ou une tête sphérique.

4. Dispositif d'attelage selon au moins l'une quelconque des revendications 1 à 3, **caractérisé en ce que** le levier de blocage (9) est maintenu de manière à pouvoir pivoter par rapport à l'organe d'accouplement (6).

5. Dispositif d'attelage selon au moins l'une quelconque des revendications 1 à 4, **caractérisé en ce que** le boulon d'arrêt (10) est maintenu de manière déplaçable axialement.

6. Dispositif d'attelage selon au moins l'une quelconque des revendications 1 à 5, **caractérisé en ce que** la surface de butée (17) s'étend essentiellement radialement par rapport au boulon d'arrêt (10).

7. Dispositif d'attelage selon au moins l'une quelconque des revendications 1 à 6, **caractérisé en ce que** le bras de fixation (12) est guidé de manière déplaçable axialement dans un alésage (13).

8. Dispositif d'attelage selon au moins l'une quelconque des revendications 1 à 7, **caractérisé en ce que** le bras de fixation (12) est traversé par le boulon d'arrêt (10).

9. Dispositif d'attelage selon au moins l'une quelconque des revendications 1 à 4, **caractérisé en ce que** le bras de fixation (12) est supporté de manière à pouvoir pivoter autour d'un axe (25) qui est orienté essentiellement parallèlement au boulon d'arrêt (10).

10. Dispositif d'attelage selon au moins l'une quelconque des revendications 1 à 9, **caractérisé en ce que** le bras de fixation (12) présente une manette (18), qui est prévue à proximité du boulon d'arrêt (10), afin de pouvoir actionner le bras de fixation (12) et le boulon d'arrêt (10) ensemble d'une seule main.
